(19) Europäisches Patentamt
European Patent Office
Office européen des brevets

(11) **EP 2 455 891 A1**

(12) **EUROPEAN PATENT APPLICATION**

(43) Date of publication:
**23.05.2012 Bulletin 2012/21**

(51) Int Cl.:
**G06K 9/20** (2006.01)  **H04N 5/235** (2006.01)
**G01N 21/64** (2006.01)

(21) Application number: **10192248.2**

(22) Date of filing: **23.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Synoptics Limited**
**Cambridge**
**Cambridgeshire CB4 1TF (GB)**

(72) Inventors:
• **Atkin, Philip**
**Cambridge, Cambridgeshire CB23 1LP (GB)**
• **Chambers, Stephen**
**Norwich, Norfolk NR5 0NF (GB)**

(74) Representative: **Brunner, Michael John**
**Gill Jennings & Every LLP**
**The Broadgate Tower**
**20 Primrose Street**
**London EC2A 2ES (GB)**

(54) **Methods and systems for automatic capture of an image of a faint pattern of light emitted by a specimen**

(57)    An imaging system 10 for automatically capturing an image of a faint pattern of light emitted by a specimen comprises: an electronic image capture device 12, such as a camera having a CCD sensor; a light-tight enclosure 24 having within a platform 32 for mounting a light-emitting specimen 30 thereon within the field of view of the image capture device 12; and a computer 50, connected to at least the image capture device 12. The computer 50 is adapted to: estimate a maximum signal level that can be expected from the specimen 30 and calculate, based on said estimated maximum signal level, a peak signal level estimate (psle); calculate an exposure time on the basis of the psle and a desired resolution for a captured image; and capture an image for the calculated exposure time. The desired resolution may a user-selected choice, balancing a need for quality of final image against the time required to capture it. An associated method is also disclosed. Multiple exposures may be combined in odder to arrive at a final captured image, which helps to reduce overall image capture time whilst maintaining reasonable quality final images.

FIG. 1

EP 2 455 891 A1

**Description**

**Field of the Invention**

The invention concerns methods of automatically capturing an image of a faint pattern of light emitted by a specimen, such as the capture of the faint patterns of light given off by a DNA, RNA, protein or other 'samples' labelled with a chemiluminescent reagent or fluorescent dye. The invention further concerns imaging systems for carrying out such methods.

**Background to the Invention**

Specifically, this invention addresses the capture of the faint patterns of light given off by a DNA, RNA, protein or other 'samples' labelled with a chemiluminescent reagent or fluorescent dye. In the case of chemiluminescence, the reagent glows faintly in the presence of particular types of molecule (such as protein) and therefore an image of the light pattern indicates the distribution of that molecule. In a similar application, a fluorescent dye is used and the sample is illuminated by light of the correct colour (frequency or wavelength) to excite the dye, and the emitted light is collected via a filter designed to pass light of the emitted frequency and block that of the excitation frequency.

To record such an image, apparatus is required that includes an electronic (digital) camera pointed at the sample via a lens, the light paths of which are within a light-tight enclosure so that no external light can interfere with the capture.

Such patterns of light are extremely faint, so that even with very sensitive cameras one or more long exposures may be required to achieve a satisfactory result, whereby sufficient photons have reached the camera's image sensor, such as a charge-coupled device (CCD) sensor or a complementary metal-oxide-semiconductor (CMOS) sensor, for a charge to be induced. In many cases, in order to capture a useful image within a reasonable amount of time, it is necessary to trade spatial resolution for decreased exposure times by using the 'binning' feature of many digital cameras. Binning allows the charge collected in each pixel within a rectangle of neighbouring pixels (say, each 1x2, 2x1, 2x2 or 4x4 group of pixels) to be combined before it is converted to a digital signal, achieving increased sensitivity at the expense of a loss of spatial information. Most commonly, a square region is used (2x2, 3x3, 6x6 etc.). However the methods described are equally applicable to non-square binning configurations. Since the signal is summed over all the pixels in each binning rectangle, the typical signal level of the binned image is increased over that of an unbinned image by a factor of the area of the rectangle, which is referred to subsequently as the "binning area".

It is important for the camera to collect light over an appropriate exposure time. Too short an exposure and insufficient charge is collected on the sensor and the signal may be swamped by 'noise' which is inevitably introduced. Too long an exposure, and so much charge may build up that the sensor becomes saturated in some regions and the light levels within those regions will be unknown.

Such faint image capture thus represents a challenge for the user of such an image capture system, because there are many parameters that must be controlled and the effect of each may be difficult to predict.

Although the present invention relates generally to a static sample giving off a notionally static pattern of light, conditions may change during the capture process and these may need to be adapted to, which normally requires further intervention by the user. For example, different chemiluminescent reagents exhibit a variety of 'dynamics', whereby the intensity of the image varies over time. The glow may start off quite faint, and then build to a maximum before slowly decaying. Depending on other factors, it may be that the timescales of these changes are of the same order as the time taken to collect the image, in which case the scene must be considered dynamic in this respect, a consequence of which is that no one exposure duration is appropriate throughout the capture sequence.

It is an objective of the present invention to overcome the difficulties associated with such prior art systems and techniques. In particular, it is an objective to provide an automated image capture system and associated method that enables high quality images to be captured automatically and in a relatively short timescale.

**Summary of the Invention**

According to a first aspect of the invention, there is provided a method of automatically capturing an image of a faint pattern of light emitted by a specimen, comprising the steps of:

   a) providing an electronic image capture device;
   b) positioning a light-emitting specimen within a field of view of the electronic image capture device;
   c) estimating a maximum signal level that can be expected from the specimen and calculating, based on said estimated maximum signal level, a peak signal level estimate (psle);
   d) selecting a desired resolution for a captured image;

e) calculating an exposure time on the basis of the psle and said desired resolution; and

f) capturing an image for the calculated exposure time.

This method enables a user to obtain a good quality image of a faint pattern of light emitted by a specimen in a reduced timescale, due to the optimisation of the exposure time for the image, which is based on a combination of two factors: an estimate as to the maximum signal level that can be expected from the specimen; and a desired resolution for the captured image.

Preferably, the step of estimating a maximum signal level that can be expected from the specimen comprises the steps of:

i) making an initial guess at a typical light level to be expected from the type of specimen;

ii) taking a preliminary image of the specimen using a first binning configuration and for a first exposure time, based on said initial guess;

iii) determining the light levels in the preliminary image and, if the maximum signal level is determined to be above a predetermined target signal maximum, decreasing the first exposure time, whereas if the maximum signal level is determined to be below a predetermined target signal minimum, increasing the first exposure time;

iv) if the first exposure time has been adjusted at step iii), taking a further preliminary image at the adjusted first exposure time;

v) repeating steps iii) to iv) until the maximum signal level in the preliminary image ($S_{max}$) is determined to be within the predetermined target signal range.

These steps enable a good, accurate estimate of the maximum signal level that can be expected from the specimen to be made. Since the purpose of the preliminary image is just to establish a good estimate of exposure time for subsequent, better quality, higher resolution images, the preliminary image can be taken using a relatively high binning area and the first exposure time can be a correspondingly short exposure time. Whilst the exposure time (and therefore total time required to determine the estimate) decreases as the binning area increases, resolution is lost when binning and therefore bright regions smaller than the binning regions tend to have their brightnesses underestimated by this procedure; this limits the amount of binning that is practical.

Calculating the psle typically comprises:

$$psle = (s_{max} \times binningArea)/t$$

where binningArea is the area of a rectangle of neighbouring pixels defining the binning configuration and t is the final, adjusted, first exposure time of step v).

The calculation of an exposure time in step e) preferably comprises:

$$T_e = (S \times f)/(psle \times binningArea_e)$$

where $T_e$ is the calculated exposure time, S is the maximum signal level that can be collected by the image capture device without saturation, and f is a factor <1 that defines the target signal range as a fraction of S, and binning Area$_e$ is for a binning configuration that achieves the resolution selected in step d).

The method may further comprise a step of analysing the image captured in step f) to determine its maximum signal level and recalculating the psle on the basis of that actual maximum signal level. This enables a dynamic approach, enabling the exposure time for any subsequent images taken by the system to be calculated on the basis of a more accurate estimate of the maximum signal level.

Optionally, the method further comprises a step of displaying the captured image. At any stage in the process, a user may view the results of the image capture.

Preferably, the step of capturing an image for the calculated exposure time comprises capturing multiple exposures. The method typically further comprises a step of processing those multiple exposures by maintaining, for each pixel of the captured image, a total intensity and a count of valid intensity measurements, where an intensity value is considered to be valid if it is below S, the maximum signal level that can be collected by the image capture device without saturation, each valid value being added to the total intensity for that pixel and increasing by one the count of valid intensity measurements. Preferably, the method further comprises a step of inspecting, for each pixel, the count of valid intensity measurements and, if any such value is zero, initiating a reduction in the exposure time prior to capturing a subsequent exposure. The method may further comprise a step of, for each pixel, generating a result pixel comprising the total intensity of the pixel divided by the count of valid pixels. In other words, the result pixel is a mean average value of all the valid intensity values for that particular pixel across the multiple exposures. Optionally, the result pixels are displayed.

By taking multiple exposures and combining their results, more accurate images can be obtained. For one reason, taking multiple exposures mitigates against the likelihood of a single long exposure resulting in saturation of the image capture device; each of the multiple exposures would have a shorter exposure time than a single exposure.

Where the method includes the specific steps of the preferred method for carrying out the step of estimating a maximum signal level that can be expected from the specimen, as described above, the method may further comprise adjusting the binning configuration between exposures. Thus, for another reason, the taking of multiple exposures enables a more dynamic approach, whereby the parameters for each exposure, such as exposure time and binning configuration can be adjusted, to take into account feedback indicative of over- or under-exposed prior exposures and changes in the levels of light being emitted by the specimen.

Specifically, the method may comprise capturing one or more exposures using a first binning configuration, capturing one or more exposures using a second, different binning configuration, and combining the data captured during exposures at the first binning configuration with data captured during exposures at the second binning configuration. This combination of exposures taken at different binning configurations exploits the fact that it may only be the brighter regions of the resultant image that are of particular interest. Those brighter areas can be captured at relatively high resolution within a reasonable space of time (using a first binning configuration), whereas the darker regions can be captured with a lower resolution, but within a reasonable space of time at the second binning configuration (having a greater binning area). Overall, a good final image can be achieved in a reduced amount of time.

In one embodiment, illustrated using a first unbinned exposure and a second exposure with a binning area of B, the B pixel values $h_i$ of the unbinned exposure are combined with the single corresponding value H from the binned exposure to produce a reconstructed unbinned image using an algorithm of the form $H_n = B.H.h_n / \Sigma h_i$ where $H_n$ represents each pixel of the reconstructed image and the summation is over the B pixels of the unbinned image corresponding to the binned pixel H.

In alternative embodiments, the data may be combined using an interpolation algorithm, including a weighting factor to smooth the result.

According to a second aspect of the invention, there is provided an imaging system for automatically capturing an image of a faint pattern of light emitted by a specimen, the system comprising:

an electronic image capture device;
a light-tight enclosure having within a platform for mounting a light-emitting specimen thereon within the field of view of the image capture device; and
a computer, connected to at least the image capture device;
wherein the computer is adapted to:
estimate a maximum signal level that can be expected from the specimen and calculate, based on said estimated maximum signal level, a peak signal level estimate (psle);
calculate an exposure time on the basis of the psle and a desired resolution for a captured image; and
capture an image for the calculated exposure time.

The system is preferably adapted to carry out the methods defined in the first aspect of the invention, although it will be noted that the step of selecting a desired resolution for a captured image may be a user-selected option rather than being automatically selected by the computer. Thus, the different possible resolutions for the captured image may be presented to the user by the computer.

## Brief Description of the Drawings

The invention will be described, by way of example, with reference to the accompanying drawings, in which:

Fig.1 is a schematic diagram of an image capture system according to an aspect of the present invention; and
Fig. 2 illustrates one option for combining data from data sets collected with different binning configurations.

## Detailed Description

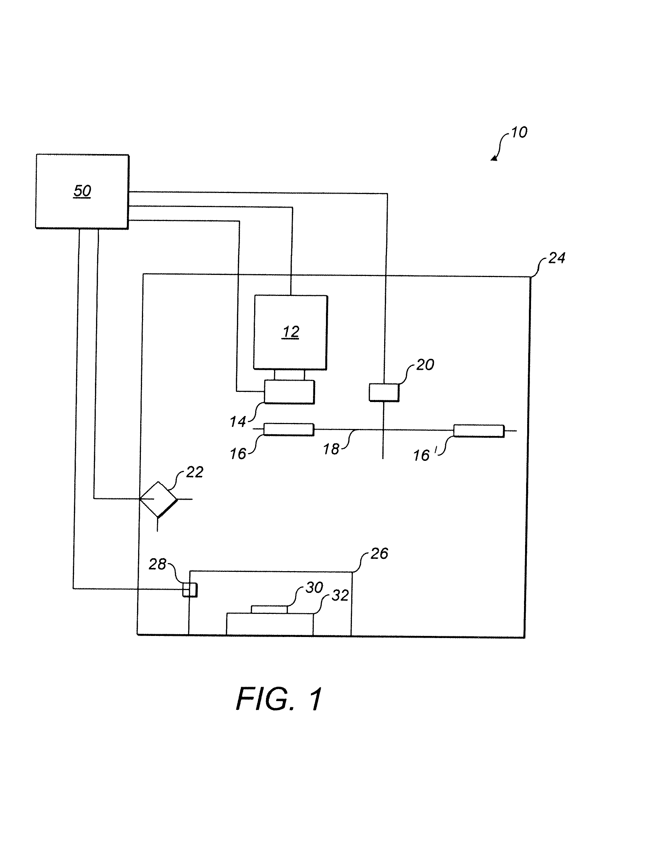

An imaging system 10 for automatically capturing an image of a faint pattern of light emitted by a specimen in accordance with the present invention is shown in Figure 1. The system 10 comprises a Charge-Coupled Device (CCD) camera 12, coupled to a lens 14 and possibly viewing through a filter 16. The filter 16 may be mounted on a wheel 18 along with several others 16'. There may also be an empty slot (not shown) on the filter wheel 18 corresponding to an unfiltered configuration. A motor 20 is connected to the wheel 18 to rotate the wheel to so that a particular filter may be selected for use by rotating the wheel 18, thereby bringing the selected filter 16 into axial alignment with the camera 12 and the lens 14. Lighting 22 of various types may be present for fluorescence applications.

The whole apparatus is enclosed within a light-tight enclosure 24 in order to block the entry of ambient light. The enclosure includes a door 26 allowing access to the interior of the enclosure 24. The door preferably includes a sensor 28 to detect when it is in an open position. In one embodiment, the camera 12 and lens 14 are located outside the light-tight enclosure 24.

A specimen 30 is mounted on a platform 32 within the enclosure 24 such that the specimen is in the field of view of the camera 12 (i.e. in axial alignment with the camera 12, the lens 14 and, if selected, a filter 16). The mounting of the specimen 32 is carried out through the door 26 when in an open position; the alignment is described in more detail below.

A computer 50 is connected to the camera 12 and advantageously to electronics controlling the lens 14, filter wheel 18 (i.e. the motor 20), the lighting 22 and the sensor 28 sensing the position of the door to the enclosure.

The system operates according to various phases as detailed below.

Adjustment phase

During the adjustment phase the specimen 30 is positioned on the platform 32 and the lens 14 is adjusted for focus (and possibly zoom). At this stage a simple view of the specimen 32 in natural light is desired and a 'preview' mode of the camera 12 can be used (one that provides fast updates but poor quality images) to display a 'live' image of the specimen 32. This is readily achieved with the door 26 of the enclosure 24 open to allow ambient light to illuminate the specimen 30 (note that at this point any pattern of chemiluminescence or fluorescence will be invisible; positioning and focus are achieved through the visible features of the specimen 32 such as its edges or colourimetric markers).

Due to the high sensitivity of the system 10 it may be necessary to select a neutral density (darkening) or other filter 16, or otherwise reduce the amount of light reaching the CCD sensor in the camera 12 during this phase of operation. Note that since the lens aperture will be fully open when capturing chemiluminescence (for maximum sensitivity), the depth of field of the lens 14 will be at its minimum. For this reason, focusing must be carried out with the lens aperture fully open.

A convenient way for the user to communicate that the positioning and focus are satisfactory is to close the door 26, which would be detected by the computer 50 connected to the door sensor 28. In any case, chemiluminescence and fluorescence capture requires that the door 26 be closed.

Measurement/planning phase

When the Adjustment phase is complete, the computer 50 sets the conditions for imaging the specimen 30. In the case of chemiluminescence, for example, no filter 16 will be used (the filter wheel 18 will be rotated to an empty position), and the maximum aperture of the lens 14 will be selected. For fluorescence, a filter 16 appropriate to the dye's emission spectrum will be selected and appropriate illumination lighting 22 turned on.

At this point, the system 10 makes some approximate measurements of the light levels coming from the specimen 30. A high binning area - not so high as to prevent the resolving of typical features - is used to achieve a high sensitivity and the short exposure time. An initial guess at a typical light level (for the specimen type, marker type etc.) is made and a short exposure captured.

At this point, one of three possibilities may occur:

- The light level is too high for the exposure duration, leading to saturation of the sensor in one or more places; in this case the exposure time is reduced significantly and another attempt made;

- The light level is too low for the exposure duration (such that there is no signal that is significantly above the expected level of noise); in this case the exposure time is increased significantly and another attempt made; or

- The maximum signal level in the camera 12 ($S_{max}$) is found to be significantly above the noise 'floor' but below saturation level. In this case the light level is estimated from the signal level and the procedure terminates.

At this point the computer 50 has a good estimate of the maximum signal level that can be expected from the specimen 30. A useful value that is calculated at this point is the peak signal level estimate, psle, as follows:

$$psle = s_{max} / (binningArea \times t)$$

where $S_{max}$ is the maximum signal level, binningArea is the number of pixels combined into each readout pixel, and t is the exposure time, for the final (acceptable) image from the camera 12. psle has the units of counts per pixel per second ("counts" is used to indicate steps in the digital output of the camera) at the full resolution of the sensor (i.e. for the 'unbinned' configuration).

A trade-off choice can now be made between - at one extreme - a capture process that works at the full resolution of the sensor but takes a long time, and - at the other - one that uses a high binning area and therefore delivers results more quickly but with reduced spatial resolution. This choice can be made automatically based on certain assumptions or, advantageously in many cases, presented as options to the user. For example, if an image is required for publication then full resolution (and a consequently longer capture process) may be appropriate. If simple presence/absence detection is required then a simple image delivered quickly may be preferable. Once this choice is made, the capture phase can begin.

Capture phase

The capture phase is initiated when the imaging conditions (lens 14, lighting 22, filter 16, enclosure 24) are set correctly, when a preliminary estimate of the maximum light level has been made, and when the user has selected a high quality, long exposure capture plan or a low resolution, high speed plan (or an intermediate one between these extremes).

The selected plan is based on a small number of exposures (typically, three). This is the number human 'experts' often use to capture images of such specimens; it represents a trade-off between a large number of short exposures (which is disadvantageous due to the noise added to each image as it is read from the sensor due to imperfections in the electronics) and a single long exposure (optimal in terms of signal-to-noise ratio, but risky because of the possibility the sensor may become saturated). A small number of images (such as three) means that the readout noise penalty is incurred only a small number of times, yet there is opportunity to adjust the exposure time should the signal level rise to the point that saturation occurs. Using a number of shorter images also means that there is the opportunity to automatically adjust the exposure times between exposures if, perhaps due to the dynamics of a dye, the light levels change or are otherwise not as expected from the initial measurements.

Each exposure takes place as follows:

• The current peak signal level estimate, psle (counts per pixel per second) is used to calculate an exposure time as follows:

$$T = (S \times f)/(psle \times binningArea)$$

Where T is the exposure time, S is the maximum signal level that can be collected by the device without saturation (typically 65535, although some cameras 12 may saturate at a level below the maximum digital level), f is a factor <1 that controls the 'target' signal level as a fraction of S, psle is the peak signal level estimate, and binningArea is the number of sensor pixels that are combined into each pixel of the result and is determined by the resolution required in the result. f is generally set to around 0.75, so that if the psle estimate is correct then after an exposure of t seconds about 75% of the possible signal level will be achieved. This means that, even if the psle underestimates the true signal level slightly, the sensor will not be saturated.

• The camera 12 is exposed for time t and the image collected and corrected for any systematic defects such as "hot" pixels or background offsets.

• The image is analysed by the computer 50 for its maximum signal level and the psle is updated according to the same formula as used in the Measurement/planning phase.

• The image is processed according to the following procedure:

    o For each pixel of the image, a total intensity and a count of valid intensity measurements is maintained. Both these quantities are initialized to zero at the start of the capture process.

o For each pixel of the captured image, the signal level is compared against the value S (the maximum value that can be captured without saturation). If the signal level is below S it is considered to be 'valid'. If the value is valid, then it is added to the total intensity for that pixel and the count of valid intensity measurements for that pixel is increased by one.

Result generation and display

At any point in the capture process, a representative result image can be obtained and displayed; this can be used to indicate progress for the user and to confirm that the system 10 is working as intended. The procedure is as follows:

- For each pixel of the camera images:

  o The count of valid samples is inspected. If any such value is zero then there is at least one pixel for which no valid intensity measurement has been collected; this can be used to initiate a reduction in the exposure time so that subsequent images are not saturated. If the count is zero, then a value of one is substituted for subsequent steps of the result generation process (to avoid the possibility of a divide-by-zero condition).

  o The result pixel is generated from the total intensity of the pixel divided by the count of valid pixels: in effect, the average value of the valid values read from the camera for this pixel.

- The image as a whole may be resized (if necessary) by interpolation so that it is the same size as a full resolution image from the camera 12. (It may be considered advantageous if the system 10 always delivers images of the same resolution).

The basic scheme explained above may be refined in various ways:

Combining images of different binning configurations

In some circumstances, such as a significant change in the brightness of the specimen 30 (due, for example, to the dynamic behaviour of the dye or reagent), it may be appropriate to change the binning configuration used to capture subsequent images once a captured image is determined to be significantly under- or over-exposed. (Keeping the binning configuration fixed might mean that a later capture becomes much too long to fit into the total exposure time estimated during planning, or that it becomes so short that it would be better to use the time to increase the resolution of the results.)

In these cases, there will be estimates of scene intensity at different resolutions due to the different binning configurations used during the acquisition process. It is necessary then to combine these different sets of data. Two methods are used:

- Hierarchical
  This is possible when each pixel of the lower-resolution images corresponds to a whole number of pixels of the higher-resolution images. For example, if one image is at 2x2 binning and another at 4x4 this method is possible because each 4x4-binned pixel corresponds to exactly four, 2x2-binned pixels; however if the two binning configurations are 2x2 and 3x3, this is not the case.
  In this method, a 'valid' pixel in a lower-resolution image corresponds to a corresponding number of 'valid' pixels in the higher-resolution image. Therefore, the 'valid count' described above may be implemented for each pixel of the higher resolution image.
- Non-Hierarchical
  This method is used when the constraints imposed by the above method cannot be met. In this case, a valid pixel must be achieved for every location at every resolution, after which a result image can be calculated at each resolution and, after extrapolation, combined to form a single result.

Deliberate variation of binning configuration to balance resolution and sensitivity

In general, users imaging the types of specimen 30 which this system is designed for are particularly interested in brighter (higher-valued) features and less interested in darker regions. Therefore, detail (high resolution) is more important in the bright features and less so elsewhere.

This observation can be exploited as follows. Consider a specimen 30 for which a full resolution image which faithfully captures detail at all brightness levels requires a long exposure of (say) 4 minutes. A 2x2 binned image, with only a quarter of the resolution but four times the sensitivity, would require only a 1 minute exposure but would not provide the required level of spatial detail for the bright features in the image. However, a 1 minute exposure at full resolution *would* faithfully record the details of the brightest features.

Therefore, an algorithm can be used to combine (for example) a 1 minute exposure at 2x2 binning, and a 1 minute exposure at full resolution (1x1 or 'unbinned'), to produce an image that shows high resolution detail of the bright features and still faithfully records the lower intensity regions (albeit at reduced resolution). This is advantageous because it retains the detail in the bright features but requires only half the total exposure time.

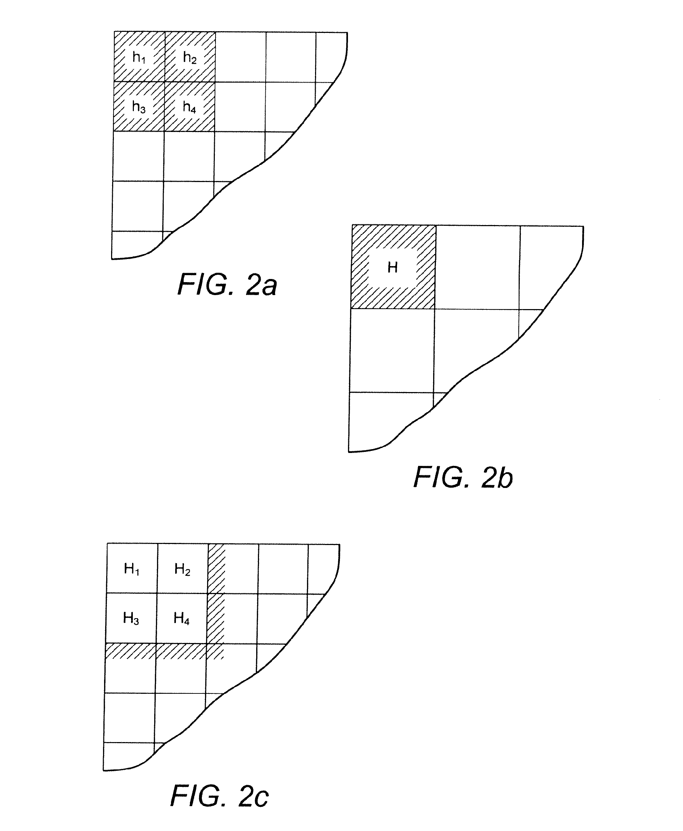

A simplistic version of this algorithm is described as follows and with reference to Figures 2a - 2c:

Consider a 2x2 square binning region of pixels on the sensor. The light intensity falling on these pixels is measured individually in the high resolution image as h1, h2, h3 and h4 (Figure 2a). For the 2x2 binned image, it is combined as H: a measurement of the sum of the four individual intensities (Figure 2b).

As a first step, the values of the 2x2 binned image are replicated to form a full resolution image where the values are duplicated in each 2x2 square; this is termed the 'reconstructed image' (Figure 2c) in the analysis below.

For 2x2 squares containing high intensities, both H and the h1, h2, h3, h4 values are well above the noise levels and are therefore reliable (although H will always be more reliable due to the statistical effect of summing the values). Therefore, the h1, h2, h3 and h4 value can be used to 'share out' H:

$$H_1 = 4.H.h_1/(h_1+h_2+h_3+h_4)$$

$$H_2 = 4.H.h_2/(h_1+h_2+h_3+h_4)$$

$$H_3 = 4.H.h_3/(h_1+h_2+h_3+h_4)$$

$$H_4 = 4.H.h_4/(h_1+h_2+h_3+h_4)$$

In this manner, the resolution of the reconstructed image can be increased where there is sufficient information to do so (in the bright features).

For 2x2 squares containing low intensities, although H is a reliable value, h1 to h4 can be expected to be corrupted by noise and therefore unreliable. In this case, the common H values of each 2x2 region of the reconstructed image are retained, and its resolution is locally that of the 2x2 binned image.

More generally, the algorithm may be expressed as:

$$H_n = B.H.h_n / \sum h_i \text{ (sum from } i=1 \ldots B)$$

where $h_n$ represents a value intensity for a pixel n taken at the full resolution (unbinned), H represents a value intensity for a group of bxb = B pixels taken using the second binning configuration, and $H_n$ represents a value intensity for a pixel corresponding to pixel n in a combined, reconstructed image.

This algorithm may be refined in various ways:

•   There is no need to restrict to 2x2 binning; other binning configurations could be used (although this would increase the difference in resolution between the different regimes).

- Instead of using simple replication to expand the binned image to the reconstructed image, interpolation could be used to smooth the result. This would result in a less 'blocky' appearance (particularly if a larger binning area were used).

- More than two binning configurations could be used: for example, images could be recorded at full, 2x2 and 4x4 binning and all combined to cope with wide dynamic range in the sample.

- Instead of a 'switch' between the high and low resolution regimes, the transition could be more gradual, as in:

$$H_n = (1-w).H + w.4.H.h_n/(h_1+h_2+h_3+h_4)$$

where w is a weighting factor that varies between zero for regions of low intensity and 1 for regions of high intensity.

- The origin of the 'binning' groups need not always be at the top left of the image; for example the top left 2x2 binning group could start at (0, 0), (0, 1), (1, 0), or (1, 1) - with subsequent groups displaced accordingly.

Greater spatial information and resolution might thereby be obtained by combining images of the same binning area but different binning origins.

Maximum Likelihood estimation

The problem of combining the binned H values with the unbinned $h_n$ values can be formulated as a maximum likelihood estimation problem.

Let $I_1$ to $I_4$ be the 'true' or 'ideal' values that would be read at the full resolution. In the full resolution image, estimates for each of these are obtained, each measurement corrupted by noise:

$$h_n = I_n + N_n$$

where $N_n$ is the noise in that single value.

An estimate for the sum of these values, again corrupted by noise, is also obtained from the corresponding binned pixel value:

$$H = I_1 + I_2 + I_3 + I_4 + N_s$$

where $N_s$ is the noise associated with the single measurement of the sum (by binning) of the four intensities. (Again, the example of 2x2 binning is used here for ease of explanation, although the method is equally applicable to other square and non-square binning arrangements).

In a maximum likelihood formulation, the most likely values for $I_1$ to $I_4$ given $h_1$ to $h_4$ and H are sought.

Assuming for the moment that the signals can be normalized such that $N_n = N$ is constant for all n and independent of the values, the maximum likelihood solution can be obtained from:

$$
\begin{bmatrix}
1+N_s^2/N^2 & 1 & 1 & 1 \\
1 & 1+N_s^2/N^2 & 1 & 1 \\
1 & 1 & 1+N_s^2/N^2 & 1 \\
1 & 1 & 1 & 1+N_s^2/N^2
\end{bmatrix}
\begin{bmatrix} I_1 \\ I_2 \\ I_3 \\ I_4 \end{bmatrix}
=
\begin{bmatrix}
H+h_1(N_s^2/N^2) \\
H+h_2(N_s^2/N^2) \\
H+h_3(N_s^2/N^2) \\
H+h_4(N_s^2/N^2)
\end{bmatrix}
$$

which has a solution of the form:

$$
\begin{bmatrix} I_1 \\ I_2 \\ I_3 \\ I_4 \end{bmatrix}
= \frac{1}{R(R+4)}
\begin{bmatrix}
R+3 & -1 & -1 & -1 \\
-1 & R+3 & -1 & -1 \\
-1 & -1 & R+3 & -1 \\
-1 & -1 & -1 & R+3
\end{bmatrix}
\begin{bmatrix}
H+h_1(N_s^2/N^2) \\
H+h_2(N_s^2/N^2) \\
H+h_3(N_s^2/N^2) \\
H+h_4(N_s^2/N^2)
\end{bmatrix}
$$

where $R=N_s^2/N^2$

The stated assumption that N and $N_s$ are independent of the values is incorrect for the raw signals because of the Poisson statistics (or "shot noise") associated with photons, which gives rise to a distribution where a component of the noise associated with a particular pixel is proportional to the true intensity at that pixel. Fortunately the use of a variance-stabilizing transform can resolve this complication. The transform is applied to the raw data and the resulting signal then has a constant noise (variance), independent of level; the solution is obtained as above, then the inverse transform is applied to restore the solution to the original levels. A suitable transform *t* is given by:

$$
t(V) = \frac{2}{\alpha}\sqrt{\alpha V + \frac{3}{8}\alpha^2 + \sigma^2 + \alpha\gamma}
$$

where $\alpha$ is the gain of the system (digital counts per photon), $\sigma$ is the standard deviation of the readout noise, and $\gamma$ is the mean value of the readout noise.

**Claims**

1.  A method of automatically capturing an image of a faint pattern of light emitted by a specimen (30), comprising the steps of:

    a) providing an electronic image capture device (12);
    b) positioning a light-emitting specimen (30) within a field of view of the electronic image capture device (12);
    c) estimating a maximum signal level that can be expected from the specimen and calculating, based on said estimated maximum signal level, a peak signal level estimate (psle);
    d) selecting a desired resolution for a captured image;
    e) calculating an exposure time on the basis of the psle and said desired resolution; and
    f) capturing an image for the calculated exposure time.

2.  The method of claim 1, wherein the step of estimating a maximum signal level that can be expected from the specimen comprises the steps of:

i) making an initial guess at a typical light level to be expected from the type of specimen;

ii) taking a preliminary image of the specimen (30) using a first binning configuration and for a first exposure time, based on said initial guess;

iii) determining the light levels in the preliminary image and, if the maximum signal level is determined to be above a predetermined target signal maximum, decreasing the first exposure time, whereas if the maximum signal level is determined to be below a predetermined target signal minimum, increasing the first exposure time;

iv) if the first exposure time has been adjusted at step iii), taking a further preliminary image at the adjusted first exposure time;

v) repeating steps iii) to iv) until the maximum signal level in the preliminary image ($S_{max}$) is determined to be within the predetermined target signal range.

3. The method of claim 2, wherein calculating the psle comprises:

$$psle = (s_{max} \times binningArea)/t$$

where binningArea is the area of a rectangle of neighbouring pixels defining the binning configuration and t is the final, adjusted, first exposure time of step v).

4. The method of any preceding claim, wherein calculating an exposure time in step e) comprises:

$$T_e = (S \times f)/(psle \times binningArea_e)$$

where $T_e$ is the calculated exposure time, S is the maximum signal level that can be collected by the image capture device (12) without saturation, and f is a factor <1 that defines the target signal range as a fraction of S, and $binningArea_e$ is chosen to achieve the required resolution in the result.

5. The method of any preceding claim, further comprising a step of analysing the image captured in step f) to determine its maximum signal level and recalculating the psle on the basis of that actual maximum signal level.

6. The method of any preceding claim, further comprising a step of displaying the captured image.

7. The method of any preceding claim, wherein step f) comprises capturing multiple exposures.

8. The method of claim 7, further comprising a step of processing the exposures captured in step f) by maintaining, for each pixel of the captured image, a total intensity and a count of valid intensity measurements, where an intensity value is considered to be valid if it is below S, the maximum signal level that can be collected by the image capture device without saturation, each valid value being added to the total intensity for that pixel and increasing by one the count of valid intensity measurements.

9. The method of claim 8, further comprising a step of inspecting, for each pixel, the count of valid intensity measurements and, if any such value is zero, initiating a reduction in the exposure time prior to capturing a subsequent exposure.

10. The method of claim 8 or claim 9, further comprising a step of, for each pixel, generating a result pixel comprising the total intensity of the pixel divided by the count of valid pixels.

11. The method of any of claims 7 to 10, when dependent on claim 2, further comprising adjusting the binning configuration between exposures.

12. The method of claim 11, comprising capturing one or more exposures using a first binning configuration, capturing one or more exposures using a second, different binning configuration, and combining the data captured during exposures at the first binning configuration with data captured during exposures at the second binning configuration.

13. The method of claim 12, wherein combining the data is carried out through an algorithm of the form $H_n = B.H.h_n/\Sigma$

$h_i$, (sum from i=1 ... B), where $h_n$ represents a value intensity for a pixel n taken at the full resolution (unbinned), H represents a value intensity for a group of bxb = B pixels taken using the second binning configuration, and $H_n$ represents a value intensity for a pixel corresponding to pixel n in a combined, reconstructed image.

14. An imaging system 10 for automatically capturing an image of a faint pattern of light emitted by a specimen (30), the system comprising:

an electronic image capture device (12);
a light-tight enclosure (24) having within a platform (32) for mounting a light-emitting specimen (30) thereon within the field of view of the image capture device (12); and
a computer (50), connected to at least the image capture device (12);
wherein the computer (50) is adapted to:
estimate a maximum signal level that can be expected from the specimen (30) and calculate, based on said estimated maximum signal level, a peak signal level estimate (psle);
calculate an exposure time on the basis of the psle and a desired resolution for a captured image; and
capture an image for the calculated exposure time.

15. The system of claim 14 adapted to carry out the method as defined in any of claims 1 to 13.

FIG. 1

FIG. 2a

FIG. 2b

FIG. 2c

Europäisches
Patentamt
European
Patent Office
Office européen
des brevets

# EUROPEAN SEARCH REPORT

Application Number

EP 10 19 2248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 791 618 B1 (SHIMIZU HITOSHI [JP]) 14 September 2004 (2004-09-14) * column 8, line 3 - column 12, paragraph 19 * ----- | 1-7, 11-15 | INV. G06K9/20 H04N5/235 G01N21/64 |
| A | US 2008/075380 A1 (DUBE SIMANT [US] ET AL) 27 March 2008 (2008-03-27) * abstract * ----- | 1-15 | |

TECHNICAL FIELDS
SEARCHED      (IPC)

G06K
H04N
G01N
G06T

The present search report has been drawn up for all claims

| Place of search | Date of completion of the search | Examiner |
|---|---|---|
| The Hague | 29 April 2011 | Sonius, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 19 2248

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2011

| Patent document cited in search report | | Publication date | Patent family member(s) | | Publication date |
|---|---|---|---|---|---|
| US 6791618 | B1 | 14-09-2004 | JP | 3678397 B2 | 03-08-2005 |
| | | | JP | 2000180361 A | 30-06-2000 |
| US 2008075380 | A1 | 27-03-2008 | NONE | | |

EPO FORM P0459

For more details about this annex : see Official Journal of the European Patent Office, No. 12/82